# EUROPÄISCHE PATENTSCHRIFT

(11) **EP 0 667 095 B1**
(45) Veröffentlichungstag und Bekanntmachung des Hinweises auf die Patenterteilung: **26.05.1999**
(21) Anmeldenummer: 95101508.0
(22) Anmeldetag: 03.02.1995
(51) Int. Cl.: A01D 34/70

(54) **Mehrzweck-Arbeitsgerät mit aufsattelbarem Transportaufbau**
Multipurpose machine with attachable container
Appareil multi-usage avec enceinte de stockage adaptable

(30) Priorität: 03.02.1994 DE 9401814 U
(43) Veröffentlichungstag der Anmeldung: 16.08.1995
(73) Patentinhaber: WIEDENMANN GMBH, D-89192 Rammingen (DE)
(72) Erfinder:
(74) Vertreter: Flügel, Otto, Dipl.-Ing.

(56) Entgegenhaltungen:
- EP-A- 0 245 801
- DE-A- 4 129 640
- FR-A- 2 538 669
- FR-A- 2 629 438
- FR-A- 2 681 216
- US-A- 5 107 661

## Beschreibung

Die Erfindung betrifft ein Mehrzweck-Arbeitsgerät auf der Basis eines Kleintraktors oder dgl., bspw. für den kommunalen Arbeitsbereich, mit einem an die Rücklehne des Fahrersitzes in Gegenfahrtrichtung gelegenen Aufnahmeraum für einen aufzusattelnden Transportbehälter zu befördernden Gutes, insbesondere Sammelbehälter für Mähgut, Kehrgut oder dgl., der zwischen der Aufsattellage auf dem Fahrzeugchassis und einer Übergabelage hoch- und über die hinter Fahrzeugbegrenzung hinausragend mittels einer hydraulisch oder dgl. betätigbaren Parallelogramm-Lenkereinrichtung bewegbar ist, die einen Endes an dem Sammelbehälter und anderen Endes an einen Rahmen angelenkt ist.

Geräte dieser Art werden je nach Einsatzzweck in steilem Gelände eingesetzt und unterliegen damit einer gewissen Unstabilität gegen Umkippen, Verschwenken um die Hinterradachse bei Hochentleerung und dgl., wenn der Schwerpunkt des insbesondere beladenen Fahrzeuges des Transportbehälters in Aufsattellage bzw. bei ungünstiger Gewichtsverteilung in Hochentleerungslage.

Der Erfindung liegt die Aufgabe zugrunde, ein fahrbares Gerät der eingangs genannten Art derart auszubilden, daß es bei Einnahme der Aufsattellage des Transportbehälters möglichst flach, insbesondere mit tiefgelegendem Schwerpunkt, und in der Hochentleerungslage mit möglichst günstiger Gewichtsverteilung gegen Kippbewegung um die Hinterradachse betrieben werden kann.

Ausgehend von einem Gerät mit den eingangs genannten Merkmalen wird diese Aufgabe erfindungsgemäß dadurch gelöst, daß der Rahmen an dem Fahrzeugchassis gehalten und im Nahbereich hinter dem Fahrersitz mit entsprechendem Abstand von den Hinterrädern und das diesen Bereich einnehmende Antriebsmotoraggregat des Traktors übergreifend angeordnet ist, wobei ein unteres Lenkerpaar - Aushebearm - der Parallelogramm-Lenkereinrichtung mit seinen Anlenkstellen an dem Transportbehälter in dessen Aufsattellage beidseitig des Fahrzeugchassis weit in den Raum unterhalb der durch den chassisfesten Aufbau des Antriebsaggregates oder dgl. bestimmten obersten Horizontalebene hinabragend - ggfs. äußerst beschränkt durch die Verschwenkbahn des transportaufbauseitigen Endes des unteren Lenkerpaares bei Überführung in die Übergabelage oberhalb der ggf. lenkbaren Hinterräder - angeordnet sind und der Transportbehälter einen entsprechenden im in Aufsattellage das chassisfeste Antriebsmotoraggregat oder dgl. übergreifenden längsmittigen nach oben gerichteten Freiraum aufweist.

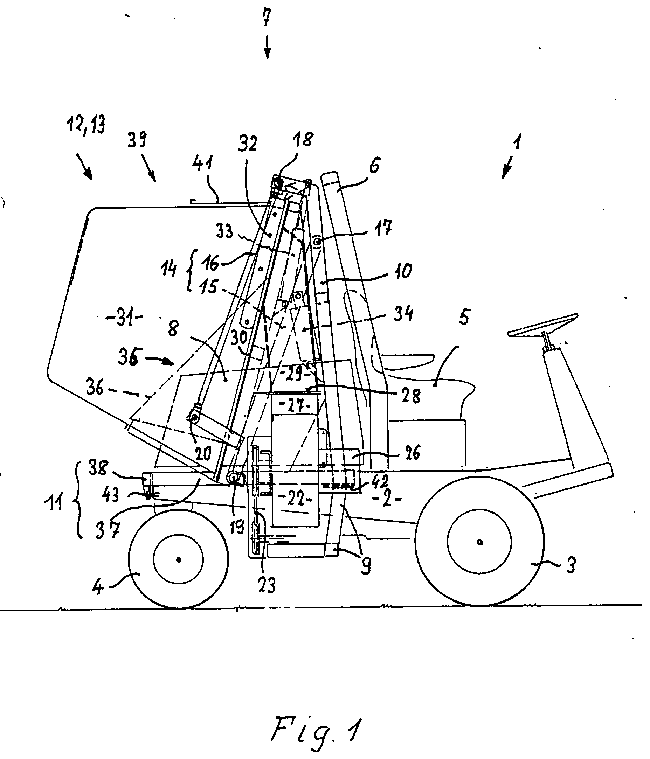

Erfindungsgemäß sind also die "schweren, tragenden Teile", d.h. der Rahmen, an dem die den Transportbehälter tragenden Parallelogrammlenker und der oder die Hubzylinder für die unteren Lenkerpaare angelenkt sind, hinter dem Fahrersitz und deutlich vor der hinteren Fahrzeugachse etwa oberhalb des Antriebsmotoraggregates bzw. dessen in Fahrtrichtung vorderen Bereich angeordnet. Das an dem Rahmen angelenkte untere Lenkerpaar - vorzugsweise zu einer verstrebten Einheit verbunden -, über das mit Hilfe der oder des Hubzylinders die Überführungskräfte für den Übergang von der Aufsattellage in die Hochentleerungs-Übergangslage eingeleitet werden, sind hinsichtlich ihres oberen rahmenseitigen Anlenkpunktes etwa durch die Entladehöhe des Transportbehälters bestimmt, während die Länge des Lenkerpaares maßgeblich für die Versetzung des Transportbehälters nach hinten über die hintere Abschlußkante des fahrbaren Gerätes hinaus in Richtung einer Übergabelage über der Ladefläche eines das Gut aufnehmenden Transportfahrzeuges oder dgl. Aufnahmestelle ist. Um den Transportbehälter, insbesondere Sammelbehälter insgesamt in der Aufsattellage möglichst tieflegen zu können und gleichwohl die vorgeschilderte weit nach hinten abragende Übergabelage zu erreichen, sind daher die Anlenkstellen an dem Transportbehälter - Sammelbehälter - des unteren Lenkerpaares beidseitig des Fahrzeugchassis möglichst tief gelegen, jedenfalls deutlich unterhalb einer Horizontalebene, die durch die obere Begrenzung chassisfester Aufbauten, hier insbesondere Antriebsmotoraggregat bzw. dessen Abdeckungshaube, im Aufsattelbereich definiert ist. Diese dem Rahmen abgewandten Enden werden hinsichtlich ihrer in der Aufsattellage untersten Stellung praktisch beschränkt durch ihre freie Verschwenkbarkeit im Zuge des Übergangs in die Übergabelage oberhalb der ggf. lenkbaren Hinterräder. Aufgrund dieser tiefgelegenen Anlenkstellen des unteren Lenkerpaares an dem Transportbehälter, insbesondere Sammelbehälter, muß dieser derart gestaltet sein, daß er den nach oben darüber hinausragenden chassisfesten Aufbau im Bereich der Aufsattellage überbrückt, hier also insbesondere die nach oben aufragende Ausgestaltung des Antriebsmotoraggregates bzw. dessen Abdeckhaube, wozu weiterhin erfindungsgemäß ein entsprechender Freiraum zwischen den seitlichen Anlenkbereichen des Transportbehälters und dessen längsmittiger oberer Begrenzung vorgesehen ist. Bei Ausbildung des Transportbehälters als Sammelbehälter äußert sich dies in einer entsprechend nach oben verwölbten Ausbildung der unteren Behälterbegrenzung, die bei Ausbildung des Behälters aus in Fahrtrichtung gelegener Stirnwandung und nach rückwärts ragender Behältenfalle sowohl in der ersten als auch in der letzteren ausgebildet werden kann. In jedem Falle ist bei geschlossenem Behälter dessen Innenraum durch die Ausbuchtung nach innen hin ausgewölbt gegenüber der übergriffenen Abdeckungshaube des Motoraggregates übergreifend geschlossen. Die Ausbuchtung kann sich grundsätzlich zur Gänze im Bereich der Unterwandung der Behälterhaube befinden, wobei dann im Stirnwandungsbereich lediglich eine dem Verlauf der Ausbuchtung entsprechende Aussparung vorgesehen ist. Die Ausbuchtung und Abdeckung gegenüber der Motoraggregathaube kann aber auch im Stirnwandungsbereich vorgesehen sein, wie dies das in der Zeichnung wiedergegebenen Ausführungsbeispiel nach den Figuren 1 bis 3 zeigt.

Bei Ausbildung des Transportbehälters als Sammelbehälter ist diesem in bevorzugter Ausführung ein seitlich angeordnetes Sauggebläse zugeordnet, das mit seinem nach vorne weisenden Sauganschlußstutzen mit geringer Schlauchlänge fast geradlinig verlaufend an den Absaugkanal eines Frontmähgerätes, Ausgang eines Kehrgerätes oder dgl. anschließbar ist und dessen Blasausgang nach oben gerichtet in der Aufsattellage des Sammelbehälters über einen Aufsetzanschluß an einen Einblaskanal des Sammelbehälters angeschlossen ist, welcher Aufsetzanschluß bei Abheben des Sammelbehälters in Richtung Übergabelage getrennt und in Gegenrichtung selbsttätig wieder geschlossen wird. Diese Anordnung des Sauggebläses ermöglicht einen besonders einfachen Anschluß an einen Ausgang des Antriebsmotoraggregates, insbesondere dessen Kurbelwelle, über ein in praktisch einer Ebene vertaufendes Riemengetriebe.

In besonders bevorzugter Ausführung ist der Rahmen mit der Parallelogramm-Lenkereinrichtung und dem daran angeschlossenen Transportbehälters, insbesondere Sammelbehälter ggfs. mit seitlich angeordnetem Sauggebläse sowie den hydraulischen Betätigungszylindern für das Anheben des Transportbehälters bzw. das Öffnen des Sammelbehälters mit trennbaren Zu- und Abläufen für Hydraulikflüssigkeit als Baueinheit ausgebildet, die sich im Sinne einer Mehrzweckverwendung des Kleintraktors auch in diesem Bereich möglichst einfach an das Fahrzeugchassis anschließen und von diesem lösen läßt. Zu diesem Zwecke ist in bevorzugter Ausbildung der Rahmen an einen Gelenkrahmen angeschlossen, der mit seitlichen, vorzugsweise etwa horizontal verlaufenden Holmen beidseitig an dem Fahrzeugchassis anbringbar ist. In besonders bevorzugter Ausbildung ist der Gestellrahmen U-förmig aus einem den U-Steg bildenden Verbindungsträger mit die U-Schenkel bildenden Holmen geformt, die durch in Längsachsrichtung des Fahrzeuges erfolgende Versetzbewegung - insbesondere mit Hilfe von in die hohlrohrförmigen Holme einführbaren Stutzen und ein entsprechendes Stützgerät - in die Verbindungslage mit dem Fahrzeugchassis bzw. aus dieser heraus überführbar sind. Im eingeführten Zustand werden die Holme und ggf. auch der Verbindungsträger an dem Chassis festgelegt. Es bedarf im Falle der Nachrüstung somit lediglich der chassisfesten Anbringung eines Rahmenträgers, um die vorstehende Verbindung zwischen den Enden der Holme und diesem in der Verbindungslage zu ermöglichen, wodurch sich die Montage besonders einfach gestaltet.

Es ist grundsätzlich möglich, zwei Hubzylinder für die Betätigung der insbesondere unteren Lenkerarme der Lenkereinrichtung in den beiden Seitenbereichen des Fahrzeugchassis bzw. der beiden aufstrebenden Holme des Rahmens anzuordnen, bei entsprechend steifer Ausgestaltung des unteren Lenkerpaares als insgesamt verschwenkbar gelagerte Einheit genügt jedoch auch nur ein in einen Seitenbereich angeordneter Hubzylinder. Desweiteren können beidseits zwischen den Rahmenseitenbereichen und den Seitenbereichen des Transportbehälters, insbesondere Sammelbehälters, obere Führungslenker der Lenkereinrichtung vorgesehen sein, es kann aber auch nur ein Lenker ausreichend sein.

Eine besonders bevorzugte Ausbildung eines Sammelbehälters besteht aus einer Zumindest in ihrem Randbereich völlig eben verlaufenden Stirnwandung, an welche im oberen Bereich um eine senkrecht zur Fahrtrichtung verlaufende Achse eine Behälterfalle angelenkt ist, die im Schließzustand vorzugsweise über einen Dichtungswulst an der flachen Berandung der Stirnwandung zur Anlage kommt. Ein das Verschwenken der Behälterfalle zwischen Schließlage und Öffnungsstellung bewirkender hydraulischer Zylinder kann die Behälterfalle in Richtung Schließlage druckbeaufschlagen. Es ist aber auch möglich, die Behältenfalle an der Stirnwandung in der Schließstellung zu verriegeln und diese Verriegelung zu Beginn des Öffnungsvorganges in die Entriegelungsstellung zu überführen, wie dies grundsätzlich bekannt ist.

Bevorzugte Ausführungen der Erfindung ergeben sich aus den Unteransprüchen, insbesondere im Zusammenhang mit den in der Zeichnung wiedergegebenen Ausführungsbeispielen, deren nachstehende Beschreibung die Erfindung näher erläutert. Es zeigen
- Figur 1: eine schematische Seitenansicht eines ersten Ausführungsbeispieles;
- Figur 2: eine schematische Rückansicht auf das Ausfürungsbeispiel gemäß Figur 2;
- Figur 3: eine schematisierte Seitenansicht des Ausführungsbeispieles, jedoch mit in die Übergabestellung überführten Sammelbehälter im Gegensatz zur Wiedergabe des Sammelbehälters in der Aufsattelstellung in Figur 1;
- Figur 4: eine schematische Seitenansicht eines zweiten Ausführungsbeispieles mit anstelle eines Sammelbehälters anderer Ausbildung des Transportbehälters.

Die Figuren zeigen einen Kleintraktor 1, dessen Fahrzeugchassis 2 in charakteristischer Bauweise ein kurz hinter den Vorderrädern 3 und entsprechend weit beabstandet von den lenkbaren Hinterrädern 4 angeordneten Fahrersitz 5 trägt. Ein Überrollbügel 6 dient dem Schutz des Fahrers bei Umkippen des Fahrzeugs.

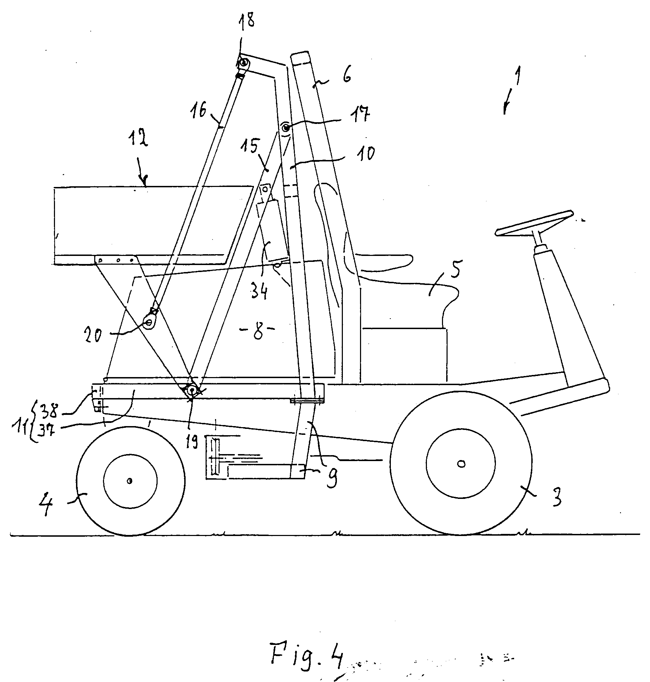

Hinter dem Fahrersitz 5 und zumindest bereichsweise vor den Hinterrädern 4 in Fahrtrichtung gesehen ist ein Aufnahmeraum 7 vorgesehen, der - neben anderen Aufbauten ggf. austauschbar - hier einen übergeordnet mit 12 bezeichneten Transportbehälter aufnimmt, der im Rahmen des Ausführungsbeispieles nach den Figuren 1 bis 3 als Sammelbehälter 13 und gemäß Figur 4 als Pritsche, Kasten, Plattform zur Aufnahme eines Fasses oder dgl. ausgebildet ist.

Im Bereich des Aufnahmeraumes 7 ist das für den Antrieb des Fahrzeugs und den Antrieb einer Hydraulikversorgung und dgl. vorgesehene Antriebsmotoraggregat 8 angeordnet, das deutlich über den Chassisrahmen nach oben hinausragt. Dabei ist zu bedenken, daß im Sinne einer Tieflegung des Schwerpunktes der Chassisrahmen tief angeordnet ist, allerdings unter Berücksichtigung der erforderlichen Bodenfreiheit für Fahrten in hügeligem Gelände.

An dem Chassisrahmen 2 ist ein Rahmenträger 9 vorgesehen, und zwar bleibend chassisfest, der der Aufnahme bzw. Befestigung der Transporteinheit dient, die vorliegend als praktisch in seiner Gesamtheit an dem Chassisrahmen anbringbar und von diesem lösbar ausgestaltet ist, um dem Mehrzweckcharakter des Fahrzeugs Rechnung zu tragen. Diese Gesamtheit umfaßt einen Rahmen 10, der an einen Gestellrahmen 11 angeschlossen bzw. mit diesem dauerhaft verbunden ist.

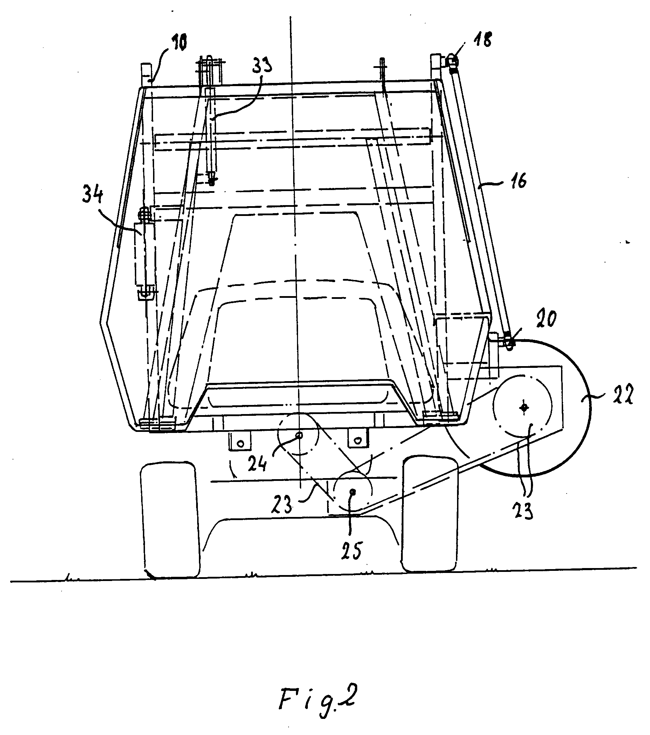

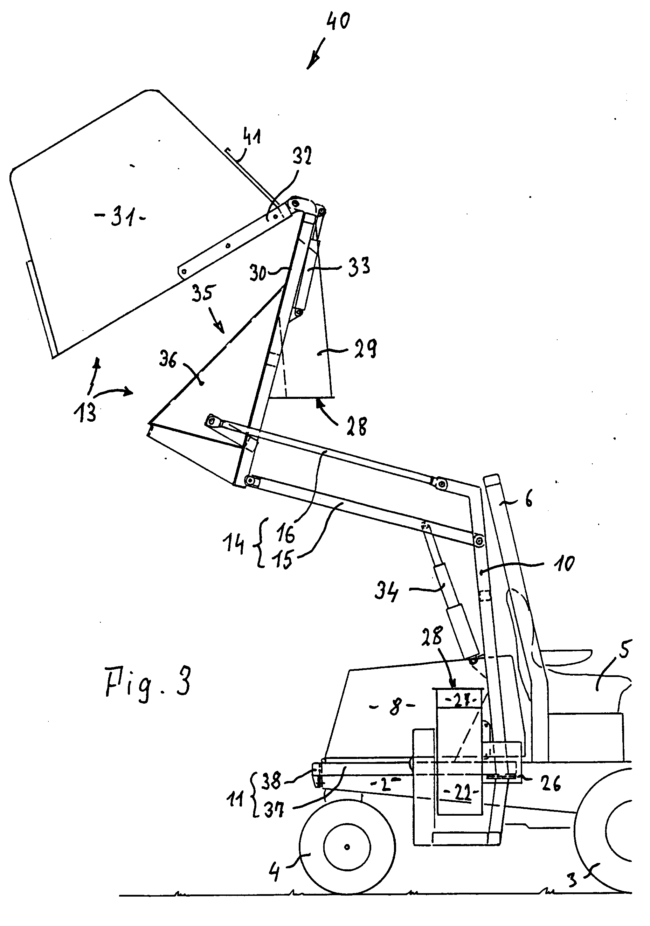

An dem Rahmen 10 ist eine insgesamt mit 14 bezeichnete Parallelogramm-Lenkereinrichtung angeschlossen, die ein - vorzugsweise als verstrebte Einheit ausgebildetes - unteres Lenkerpaar 15 und einen oberen Lenker 16 - ggf. auch ein Lenkerpaar - umfaßt. Das untere Lenkerpaar ist bei 17 an dem Rahmen 10 angelenkt, das obere Lenkerpaar bei 18. Die diesen rahmenseitigen Anlenkstellen 17 und 18 abgewandten Enden sind hinsichtlich des unteren Lenkerpaares bei 19 und hinsichtlich des oberen Lenkers bei 20 an dem Transportbehälter, nach den Figuren 1 bis 3 als Sammelbehälter 13 ausgebildet, angelenkt. Dabei greift das untere Lenkerpaar über die Gelenkstelle 19 im unteren Randbereich des Transportbehälters 12 bzw. Sammelbehälters 13 an. In der Aufsetzlage - Figuren 1 und 2 des ersten Ausführungsbeispieles und Figur 4 für das zweite Ausführungsbeispiel - ist der Transportbehälter bzw. Sammelbehälter 13 in der sogenannten Aufsattellage 39 wiedergegeben. Man erkennt, daß dabei die Anlenkstellen 19 zwischen unterem Lenkerpaar und Transportbehälter bzw. Sammelbehälter verhältnismäßig tief, jedenfalls deutlich unterhalb der oberen Begrenzung des Antriebsmotoraggregates liegen. Da die Gelenkstellen 19 auch den unteren Bereich des Transportbehälters bzw. Sammelbehälters 13 beschreiben, muß dieser also das Antriebsmotoraggregat mit einem Freiraum entsprechend übergreifend ausgebildet sein, was beim zweiten Ausführungsbeispiel gemäß Figur 4 durch entsprechend weit von der Ladeplattform nach unten abragende seitliche Stützen geschieht, beim Ausführungsbeispiel nach den Figuren 1 bis 3 durch eine entsprechend im Längsmittelbereich verlaufende nach oben gewölbte Ausbuchtung des Sammelbehälter-Unterbodens, derart, daß in der Aufsattellage das Antriebsmotoraggregat, besser dessen Abdeckhaube, gerade abgeschirmt übergriffen wird. Auf diese Weise erstreckt sich der Behälterinnenraum nicht nur bis zur oberen Begrenzung des Motoraggregates bzw. dessen Abdeckhaube, sondern beidseitig nach unten bis in den Bereich des Fahrzeugchassis 2 und ggf. noch darüberhinaus, je nach dem, wie tief die Gelenkstellen 19 angeordnet sind. Die tiefste Lage ergibt sich aus der erforderlichen freien Verschwenkbarkeit des dem Rahmen 10 abgewandten Endes des unteren Lenkerpaares 15 bei Verschwenken in die Übergabelage des Sammelbehälters (Figur 3) oberhalb der lenkbaren Hinterräder. Bezogen auf den gesamten Behälterinnenraum ergibt sich aufgrund dieses beidseitigen Umgreifens des Antriebsmotoraggregates ein entsprechend tiefliegender Schwerpunkt des gefüllten Behälters.

Während die Anlenkstellen 17 des unteren Lenkerpaares mehr oder weniger durch die gewünschte Höhe der Übergabelage bestimmt ist, ergibt sich die Versetzung des Sammelbehälters in der Übergabelage über den hinteren Fahrzeugchassisabschluß hinaus durch die Länge des unteren Lenkerpaares. Die tiefe Lage der behälterseitigen Gelenkstellen 19 dient also zwei Gesichtspunkten, nämlich zum einen der weit gestreckten Ausschwenkbarkeit des Transportbehälters bzw. Sammelbehälters in der Übergabelage nach hinten und der Tieflegung des Sammelbehälterschwerpunktes. Die Anordnung des Rahmens 10 im Nahbereich hinter dem Fahrersitz und damit etwa im Mittelbereich zwischen den Vorder- und Hinterrädern 3 und 4 schafft als tragendes schweres Teil ein Gegengewicht zu dem über die Hinterkante des Fahrzeugchassis hinaus verschwenkten Transportbehälter 12 bzw. Sammelbehälters in der Übergabelage.

In den Ausführungsbeispielen ist der Gelenkrahmen 11, an dem der Rahmen 10 als tragendes Teil befestigt ist, U-förmig ausgebildet, der sich in der gezeigten Einbaulage an dem Chassis in etwa horizontaler Ebene erstreckt. Der Stegteil des U wird dabei durch einen Verbindungsträger 38 gebildet, an dessen beiden Enden beidseitig des Chassis in Fahrtrichtung abstrebende Holme 37 befestigt sind, die die Schenke des U bilden. Dieser U-förmige Gestellrahmen ist in Fahrtrichtung auf das Fahrzeugchassis aufgeschoben und in dieser Lage hinsichtlich der freien Enden der Holme bei 42 an dem Rahmenträger 9 und hinsichtlich des Verbindungsträgers bei 43 am hinteren Abschlußbereich des Fahrzeugchassis 2 lösbar festgelegt. Will man anstelle des Transportbehälters 12 bzw. Sammelbehälters 13 einen anderen Aufbau vorsehen oder ohne Aufbau fahren, dann läßt sich nach Lösen der vorerwähnten Befestigungen 42 und 43 der U-förmige Gestellrahmen nebst Rahmen, Parallelogramm-Lenkereinrichtung und Transportbehälter bzw. Sammelbehälter nebst hydraulischer Betätigungseinrichtungen nach Lösen entsprechender Verbindungsleitungen von dem Fahrzeugchassis durch Bewegen entgegen der Fahrtrichtung abziehen. Dies kann bspw. mittels in die hohlrohrförmigen Holme eingeführten Stutzen geschehen, an denen ein Stützgerät anhebend angreift, so daß Reibverluste in den nicht dargestellten chassisfesten Führungen für die Holme des Gestellrahmens gemindert werden.

In Form der Ausbildung des Transportbehälters als Sammelbehälter kann diesem ein Sauggebläse 22 zugeordnet sein, und zwar durch Anbau in einem Seitenbereich, wodurch das Sauggebläse über seinen Ansaugstutzen 26 auf kurzem und fast krümmungsfreiem Schlauchweg an ein frontseitiges Mähgerät, Kehrgerät, Laubaufsauggerät oder dgl. angeschlossen werden kann. Diese seitliche Anordnung des Sauggebläses 22 schafft zugleich die Möglichkeit, den Abblasstutzen 27 im zugeordneten Seitenbereich des Sammelbehältes 13 nach oben gerichtet auf einen Einblaskanal 29 auszurichten, der ebenfalls nach oben führend in den Sammelbehälterinnenraum mündet. Die einander zugewandten Berandungen von Abblasstutzen 27 und Einblaskanal 29 treffen in der Aufsattellage 39 unter Bildung eines Aufsetzanschlußes 28 selbsttätig aufeinander; bei Überführen des Sammelbehälters in die Übergabelage 40 wird dieser Aufsetzanschluß durch Abheben getrennt und nach Rückkehr in die Aufsattellage 39 durch Aufsetzen wieder hergestellt. Der Rotor des Sauggebläses ist bei dieser seitlichen Einbaulage in einfacher Weise über einen Riementrieb 23 an die Kurbelwelle 24 des Antriebsmotoraggregates 8 anschließbar, ggf. unter Zwischenschaltung einer umlenkenden Zwischenwelle 25, die die Riemenführung der tiefen Lage der Unterberandung des in der Aufsattellage 39 befindlichen Sammelbehälters 13 umgreift, wie dies in Figur 2 angedeutet ist.

Insbesondere in Zusammenschau der Figuren 1 und 3 ergibt sich die Funktion des durch den Aushebezylinder 34 betätigten unteren Lenkerpaares 15 und oberen Lenkers 16 hinsichtlich der Führung des Sammelbehälters zwischen der Aufsattellage 39 und der Übergabelage 40. Der Fallenzylinder 33 verdeutlicht in seiner Wirkung auf den Fallenrahmen 32 die Öffnungsbewegung der Behälterfalle 31 gegenüber der flach ausgebildeten Behälterstirnwandung 30.

Im vorliegenden Falle ist die Ausbuchtung für das Übergreifen des Motoraggregates in der Aufsattellage 39 des Behälters 13 durch eine mittige Ausbuchtung 35 im Rahmen der Behälterstirnwandung 30 verwirklicht, und zwar durch eine Auswölbungshaube 36, die einen entsprechenden Ausschnitt der Behälterstirnwandung 30 übergreift. Die Auswölbungshaube 36 ist dabei so geformt, daß in den Sammelbehälter aufgenommenes Gut bei Überführung in die Übergabelage 40 und Öffnen der Behälterfalle 31 hindernisfrei aus dem Behälterinneren ausgleiten kann.

Wie aus den Figuren 1 und 3 ersichtlich, ist der Sammelbehälter in seinem nach oben weisenden Wandungsbereich, hier durch die Oberwandung der Behälterfalle 30 gebildet, mit einer Öffnung versehen, durch die die Förderluft des Gebläses aus dem Behälterinneren im Zuge des Beladungsvorganges entweichen kann. Diese Öffnung ist außenseitig von einem verschwenkbaren Leitblech 41 übergriffen, das unter entsprechend hohem Luftdruck nach oben verschwenkt und damit den Füllzustand des Sammelbehälters anzeigt. Bei noch nicht entsprechend weit fortgeschrittener Füllung kann nämlich die Gebläseluft durch ein in der rückwärtigen Wandung der Behälterfalle angeordnetes Öffnungssieb entweichen.

## Patentansprüche

1. Mehrweck-Arbeitsgerät auf der Basis eines Kleintraktors (1), bspw. für den Kommunalbereich, mit einem an die Rücklehne des Fahrersitzes (5) in Gegenfahrtrichtung gelegenen Aufnahmeraum (7) für einen aufzusattelnden Transportbehälter (12) der zwischen der Aufsattellage (39) auf dem Fahrzeugchassis (2) und einer Übergabelage (40) hoch- und über die hintere Fahrzeugbegrenzung hinausragend mittels einer verschwenkbaren Parallelogramm-Lenkereinrichtung (14) bewegbar ist, die einen Endes an dem Transportbehälter (12) und anderen Endes an einen Rahmen (10) angelenkt ist, der an dem Fahrzeugchassis (2) gehalten und im Nahbereich hinter dem Fahrersitz (5) mit entsprechendem Abstand von den Hinterrädern (4) und das diesen Bereich einnehmende Antriebsmotoraggregat (8) des Traktors übergreifend angeordnet ist, wobei ein unteres Lenkerpaar (15) - der Parallelogramm-Lenkereinrichtung (14) mit seinen Anlenkstellen (19) an dem Transportbehälter (12) in dessen Aufsattellage (39) beidseitig des Fahrzeugchassis (2) weit in den Raum unterhalb der durch den chassisfesten Aufbau des Antriebsaggregates bestimmten obersten Horizontalebene hinabragend angeordnet sind und der Transportbehälter (12) einen entsprechenden im in Aufsattellage (39) das chassisfeste Antriebsaggregat (8) übergreifenden längsmittigen nach oben gerichteten Freiraum aufweist.

2. Gerät nach Anspruch 1,
dadurch gekennzeichnet,
daß der Transportbehälter (12) ein Sammelbehälter (13) für Mähgut, Kehrgut oder dgl. ist.

3. Gerät nach Anspruch 2,
**dadurch gekennzeichnet**,
daß der als Sammelbehälter (13) ausgebildete Transportbehälter (12) eine das Antriebsaggregat bzw. dessen Abdeckung (8) in der Aufsattellage (39) nah beabstandete Ausbuchtung (35) aufweist, die ins Behälterinnere vorgewölbt ist.

4. Gerät nach Anspruch 3,
**dadurch gekennzeichnet**,
daß der Sammelbehälter (13) einen in Vorwärtsfahrtrichtung gesehenen Stirnwandbereich (30) und eine rückwärtige Behälterfalle (31) aufweist, wobei die Ausbuchtung (35) im Stirnwandbereich (30) und/oder Fallenbereich (31) ausgebildet ist, für den Fall, daß die Ausbuchtungsausbildung auf einen dieser Teile beschränkt ist, mit einer entsprechenden Aussparung in einer quer zur Fahrtrichtung verlaufenden Wandung des anderen Teils.

5. Gerät nach Anspruch 3 oder 4,
**dadurch gekennzeichnet**,
daß ein Sauggebläse (22) seitlich des Sammelbehälters (13) angeordnet ist, dessen Läufer an einen Ausgang - insbesondere Kurbelwelle - des Antriebs aggregates (8), vorzugsweise über einen Riementrieb (23), getrieblich angeschlossen ist, dessen Saugeingang (26) mit einem annähernd geradlinig verlaufenden kurzen Anschlußschlauch an ein Frontgerät, z.B. Mähgerät, Kehrgerät oder dgl., angeschlossen ist und dessen Blasausgang (27) über einen Aufsetzanschluß (28) in der Aufsattellage (39) an einen Einblaskanal (29) des Sammelbehälters (13) angeschlossen ist.

6. Gerät nach einem der Ansprüche 1 bis 5,
**dadurch gekennzeichnet**,
daß der Rahmen (10) und damit der Transportbehälter (12), - der insbesondere als Sammelbehälter (13) ggfs. mit seitlich angeordnetem Sauggebläse (22) ausgebildet ist - als an dem Fahrzeugchassis (2) austauschbar anzuordnende Einheit mit einem Gestellrahmen (11) versehen ist, der mittels Holmen (37) in eine Befestigungsposition an dem Fahrzeugchassis (2) einsetzbar und in der Einsetzlage mit dem Fahrzeugchassis verbindbar ist.

7. Gerät nach Anspruch 6,
**dadurch gekennzeichnet**,
daß der Gestellrahmen (11) U-förmig zwei sich in den beiden Seitenbereichen des Fahrzeugchassis (2) erstreckende Holme (37) und einen quer dazu verlaufenden, starr an diese angeschlossenen Verbindungsträger (38) aufweist, und daß die Holme (37) an ihren frei auslaufenden Enden an einem bleibend chassisfest anzuordnenden Rahmenträger (9) und ggfs. der Verbindungsträger (38) zusätzlich im rückwärtigen Fahrzeugchassisbereich befestigbar (42, 43) sind.

8. Gerät nach Anspruch 7,
**dadurch gekennzeichnet**,
daß in die Holme (37) Stutzen einführbar sind, die über ein Stützgerät anhebbar und in Gegenfahrtrichtung unter Abziehen des Gestellrahmens und damit des Rahmens nebst Transportbehälter bewegbar sind.

9. Gerät nach einem der Ansprüche 1 bis 8,
**dadurch gekennzeichnet**,
daß der Transportbehälter (12) mittels einer hydraulisch verschwenkbaren Parallelogramm-Lenkereinrichtung (14) bewegbar ist.

10. Gerät nach einem der Ansprüche 1 bis 9,
**dadurch gekennzeichnet**,
daß nur ein hydraulischer Aushebezylinder (34) für die Überführung des Transportbehälters (12), der insbesondere als Sammelbehälter ausgebildet ist (13), von der Aufsattellage (39) in die Übergabelage (40) an einer Fahrzeugchassisseite zwischen einem aufstrebenden Seitenholm des Rahmens (10) und einem Lenker des in sich zu einer steifen Einheit ausgebildeten unteren Lenkerpaares (15) vorgesehen ist.

11. Gerät nach einem der Ansprüche 1 bis 10,
**dadurch gekennzeichnet**,
daß der Oberlenkerbereich der Parallelogramm-Lenkereinrichtung (14) als Führungslenker nur einen an einer Fahrzeugchassisseite angeordneten oberen Lenker (16) aufweist.

12. Gerät nach einem der Ansprüche 4 bis 11,
**dadurch gekennzeichnet**,
daß der Stirnwandbereich des Sammelbehälters (13) als flache Behälterstirnwandung (30) ausgebildet ist, an deren Randbereich die den Behälterinnenraum im übrigen einschließende Behälterfalle (31) im Schließzustand ggfs. über einen Dichtungswulst anliegt und die bei Ausbildung der mittigen Ausbuchtung (35) im Stirnwandbereich eine Aussparung mit einer diese übergreifenden Auswölbungshaube (36) aufweist, die nach oben hin glatt in die ebene Behälterstirnwandung (30) ausläuft.

## Claims

1. A multi-purpose machine on the basis of a small tractor (1), e.g. for municipal use, with an accommodation space (7) counter to the direction of travel located at the back of the driver's seat for a transportation container (12) which is to be coupled, this transportation container being liftable upwards and outwards beyond the rear extent of the vehicle, between the coupling position (39) on the vehicle chassis (2) and a position of transfer, by means of a swivellable parallelogram guiding apparatus (14), of which one end is pivoted on the transportation container (12) and the other end on a frame (10) which is secured on the vehicle chassis (2) and positioned close behind the driver's seat (5) at a corresponding distance from the rear wheels (4) and extends over the drive motor unit (8) of the tractor which occupies this area, wherein a lower guide pair (15) of the parallelogram guiding apparatus (14) is arranged with its pivot points (19) on the transportation container (12), in the coupling position (39) thereof, on both sides of the vehicle chassis (2), projecting downwards far into the space below the uppermost horizontal plane defined by the structure of the drive unit fixed to the chassis, and the transportation conveyor (12) has a corresponding upwardly-directed central longitudinal cavity extending over the drive unit (8) integral with the chassis in the coupled position (39).

2. An apparatus according to claim 1, characterised in that the transportation container (12) is a collection container for grass cuttings, sweepings or similar.

3. An apparatus according to claim 2, characterised in that the transportation container (12) which is designed as a collection container (13) has a convexity (35) close to the drive unit or its cover (8) in the coupling position (39) which is pre-curved into the interior of the container.

4. An apparatus according to claim 3, characterised in that the collection container (13) has a front wall area (30) and a rearward container trap (31), seen from the forward driving direction, wherein the convexity (35) in the area of the front wall (30) and/or trap area (31) is designed for the event that the convexity formation is limited to one of these parts, with a corresponding recess in a wall of the other part which runs transversely to the direction of travel.

5. An apparatus according to claim 3 or 4, characterised in that a suction fan (22) is arranged laterally on the collection container (13), the rotor of which is drivingly connected to an output - especially the crankshaft - of the drive unit (8), preferably via a belt drive (23), and that the suction input (26) of said suction fan is connected via an approximately straight-running short connection pipe to a front apparatus, e.g. mower, sweeper or similar, and that its blower output (27) is connected to an insufflation channel (29) of the collection container (13) via a fitting connection (28) in the coupling position (39).

6. An apparatus according to one of claims 1 to 5, characterised in that the frame (10) and hence the transportation container (12), which is especially designed as a collection container (13), possibly provided with a laterally-disposed suction fan (22) as a unit which is to be disposed removably on the vehicle chassis (2) and a frame panel, can be secured to an attachment position on the vehicle chassis (2) by means of struts (37) and is connectable to the vehicle chassis in the coupling position.

7. An apparatus according to claim 6, characterised in that the frame panel (11) has two U-shaped struts (37) which extend into the two side areas of the vehicle chassis (2) and a connecting piece (38) extending at right angles thereto and being rigidly connected to the latter, and that the free ends of the struts (37) are attachable to a frame carrier (9) which remains fixed to the chassis, and possibly also to the connecting piece (38) in the rearward vehicle chassis area (42, 43).

8. An apparatus according to claim 7, characterised in that studs can be inserted into the struts (37) which can be lifted via a supporting apparatus and are moveable in a direction counter to the direction of travel on removal of the frame panel and hence the frame together with the transportation container.

9. An apparatus according to one of claims 1 to 8, characterised in that the transportation container (12) can be moved via a hydraulically-pivotable parallelogram guiding apparatus (14).

10. An apparatus according to one of claims 1 to 9, characterised in that only one hydraulic lifting cylinder (34) is provided to transfer the transportation container (12), which is especially designed as a collection container (13), from the coupling position (39) into the transfer position (40) on one vehicle chassis side between a rising side strut of the frame (10) and a guide of the lower guide pair (15), designed as a rigid unit.

11. An apparatus according to one of claims 1 to 10, characterised in that the upper guide area of the parallelogram guide apparatus (14) only has one upper guide (16) arranged on one side of the vehicle chassis as a leading guide.

12. An apparatus according to one of claims 4 to 11, characterised in that the face wall area of the collection container (13) is designed as a flat container face wall, the container trap (31), including the container interior, resting against the edge area thereof in its closed state, possibly over a sealing bulge, and which has a recess on forming the central convexity (35) in the face wall area, being overlapped by a bulge cover (36) which runs smoothly upwards into the flat container face wall.

## Revendications

1. Appareil multi-usage basé sur un petit tracteur (1), par exemple destiné à une commune rurale, avec un espace de logement (7) placé dans la direction inverse de la direction de roulage, sur le dossier du siège de conducteur (5), pour un récipient de transport (12), destiné à être monté sur une sellette et déplaçable, entre la position sur sellette (39), sur le châssis de véhicule (2), et une position de transfert (40), en saillie en hauteur et au-delà de la limite arrière du véhicule, au moyen d'un dispositif à bras articulés en parallélogramme (14) susceptible de pivoter, dispositif articulé, à une extrémité, au récipient de transport (12) et, à l'autre extrémité, à un cadre (10), fixé sur le châssis de véhicule (2) et disposé dans la zone de proximité située derrière le siège de véhicule (5), avec un espacement correspondant vis-à-vis des roues arrière (4), et chevauchant le groupe moteur d'entraînement (8), occupant cette zone du tracteur, cependant qu'une paire de bras articulés inférieurs (15) du dispositif à bras articulés en parallélogramme (14) est disposée, avec ses points d'articulation (19) sur le récipient de transport (12), lorsqu'on est dans sa position sur sellette (39), placés de part et d'autre du châssis de véhicule (2), pénétrant loin dans l'espace se trouvant au-dessous du plan horizontal le plus haut déterminé par la structure, fixée au châssis, du groupe d'entraînement, et le récipient de transport (12) présentant un espace libre correspondant, tourné vers le haut, placé centralement longitudinalement, chevauchant le groupe d'entraînement (8) fixé au châssis, lorsqu'il se trouve dans la position sur sellette (39).

2. Appareil selon la revendication 1,
caractérisé en ce que
le récipient de transport (12) est un récipient de collecte (13) destiné à un produit de fauchage-moissonnage, des ordures, ou analogues.

3. Appareil selon la revendication 2, caractérisé en ce que le récipient de transport (12) réalisé sous la forme d'un récipient de collecte (13) présente une échancrure (35), placée de façon espacée et proche du groupe d'entraînement, respectivement de son recouvrement (8), lorsque le récipient est dans la position sur sellette (39), et pré-incurvée vers l'intérieur du récipient.

4. Appareil selon la revendication 3,
caractérisé en ce que
le récipient de collecte (13) présente une zone de paroi frontale (30), en observant dans la direction de roulage avant, et une trappe de récipient (31) arrière, l'échancrure (35) étant réalisée dans la zone de paroi frontale (30) et/ou la zone de trappe (31), dans le cas où la configuration à échancrure est limitée à l'une de ces parties, avec un évidement correspondant ménagé dans une paroi, s'étendant transversalement par rapport à la direction de roulage, de l'autre partie.

5. Appareil selon la revendication 3 ou 4,
caractérisé en ce qu'
une soufflante d'aspiration (22) est disposée sur le côté du récipient de collecte (13), soufflante dont le rotor est raccordé en transmission à une sortie - en particulier un vilebrequin - appartenant au groupe d'entraînement, de préférence par l'intermédiaire d'une transmission à courroie (23), dont l'entrée d'aspiration (26) est raccordée, à l'aide d'un tuyau de raccordement court s'étendant selon un tracé à peu près rectiligne, à un appareil frontal, par exemple un appareil de fauchage-moissonnage, un appareil de balayage d'ordures ou analogues, et dont la sortie de soufflage (27) est raccordée, par l'intermédiaire d'un raccord démontable (28), dans la position sur sellette (39), à un canal d'insufflation (29) du récipient de collecte (13).

6. Appareil selon l'une des revendications 1 à 5,
caractérisé en ce que
le cadre (10) et, ainsi, le récipient de transport (12), réalisé en particulier sous la forme de récipient de collecte (13), le cas échéant avec une soufflante d'aspiration (12) disposée latéralement, est doté, a titre d'ensemble disposé de façon remplaçable sur le châssis de véhicule (2), d'un cadre de bâti (11) insérable, au moyen de montants (37), dans une position de fixation, sur le châssis de véhicule (2), et susceptible d'être relié au châssis du véhicule, en position d'insertion.

7. Appareil selon la revendication 6,
caractérisé en ce que
le cadre de bâti (11) en forme de U présente deux montants (37), s'étendant dans les deux zones latérales du châssis de véhicule (2), et une poutre de liaison (38) s'étendant transversalement par rapport aux montants et raccordée rigidement à ceux-ci, et en ce que les montants (37) sont susceptibles d'être fixés (42, 43), à leurs extrémités en saillie librement, à une poutre de cadre (9) disposée à demeure sur le châssis et, le cas échéant, la poutre de liaison (38) est susceptible d'être fixée en plus dans la zone de châssis arrière du véhicule.

8. Appareil selon la revendication 7,
caractérisé en ce que
dans les montants (37) peuvent être introduits des tubulures, susceptibles d'être levées par l'intermédiaire d'un appareil de soutien et déplaçables dans la direction inverse du roulage, avec extraction du cadre de bâti et ainsi du cadre, outre le récipient de transport.

9. Appareil selon l'une des revendications 1 à 8,
caractérisé en ce que
le récipient de transport (12) est déplaçable au moyen d'un dispositif à bras articulés en parallélogramme (14) pouvant pivoter de façon hydraulique.

10. Appareil selon l'une des revendications 1 à 9,
caractérisé en ce qu'
un seul vérin de soulèvement hydraulique (34) est prévu pour le passage du récipient de transport (12), réalisé en particulier sous la forme de récipient de collecte (13), de la position sur sellette (39) à la position de transfert (40), vérin monté sur un côté du châssis du véhicule, entre un montant latéral d'entretoisement du cadre (10) et un bras articulé de la paire de bras articulés inférieurs (15) réalisée pour constituer un ensemble rigide.

11. Appareil selon l'une des revendications 1 à 10,
caractérisé en ce que
la zone de bras articulés supérieurs du dispositif à bras articulés en parallélogramme (14) présente, à titre de bras articulé de guidage, seulement un bras articulé supérieur (16) disposé sur un côté du châssis du véhicule.

12. Appareil selon l'une des revendications 4 à 11,
caractérisé en ce que
la zone de paroi frontale du récipient de collecte (13) est réalisée sous la forme d'une paroi frontale de récipient (30) plate, sur la zone de bordure de laquelle la trappe de récipient (31) incluant au reste l'espace intérieur du récipient, appuie à l'état fermé, le cas échéant par l'intermédiaire d'un bourrelet d'étanchéité, et qui, en cas de réalisation de l'échancrure centrale (35) dans la zone de paroi frontale, présente un évidement doté d'un capot à bombement (36) le chevauchant, continuant vers le haut de façon lisse en devenant la paroi frontale (30) plane du récipient.
